(19) Europäisches Patentamt
European Patent Office
Office européen des brevets

(11) EP 4 657 322 A1

(12) DEMANDE DE BREVET EUROPEEN

(43) Date de publication:
03.12.2025 Bulletin 2025/49

(21) Numéro de dépôt: 25305739.2

(22) Date de dépôt: 22.05.2025

(51) Classification Internationale des Brevets (IPC):
G06N 3/0464 $^{(2023.01)}$  G06N 3/048 $^{(2023.01)}$
G06N 3/08 $^{(2023.01)}$  B33Y 50/02 $^{(2015.01)}$
G06N 3/02 $^{(2006.01)}$  B29C 64/393 $^{(2017.01)}$
B33Y 10/00 $^{(2015.01)}$  G06F 30/27 $^{(2020.01)}$
G06N 3/0455 $^{(2023.01)}$  G06F 113/10 $^{(2020.01)}$

(52) Classification Coopérative des Brevets (CPC):
G06F 30/27; B29C 64/393; B33Y 10/00;
B33Y 50/02; G06N 3/0455; G06N 3/0464;
G06N 3/048; G06N 3/08; G06F 2113/10

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 31.05.2024 FR 2405706

(71) Demandeur: SAFRAN
75015 Paris (FR)

(72) Inventeurs:
• REDOULES, Guillaume
77550 MOISSY-CRAMAYEL (FR)
• SELO, Richard Roger Joachim
77550 MOISSY-CRAMAYEL (FR)
• BELKHIR, Nacim
77550 MOISSY-CRAMAYEL (FR)

(74) Mandataire: Regimbeau
20, rue de Chazelles
75847 Paris Cedex 17 (FR)

(54) **PROCÉDÉ ET DISPOSITIF DE FABRICATION ADDITIVE D'UNE PIÈCE À CÉRAMIQUE PHOTOPOLYMÉRISÉE**

(57) L'invention concerne un procédé fabrication d'une pièce (P) à matière céramique photopolymérisée à l'aide d'une machine de fabrication additive, comportant les étapes suivantes : entraînement (E2) d'un premier réseau de neurones sur les images ($XA_i$), obtention (E3) de N troisièmes images ($PR_i$) de la matière de pièces (P') de test, entraînement (E4) d'un deuxième réseau de neurones, correction, à partir des premier et deuxième réseaux ayant été entraînés, d'une des images ($XA_i$) en une image corrigée ($X_{opt(i)}$) de consigne, la machine fabriquant (E10) la pièce (P) en déposant et photopolymérisant les N tranches ($T_i$) de photopolymérisation dans les N plans superposés ($H_i$) de dépôt de la matière céramique suivant les N premières images ($XA_i$) bidimensionnelles de consigne, dont la quatrième image ($x_i$) a été remplacée par l'image corrigée ($X_{opt(i)}$).

**FIG. 2**

E1 — $XA_i, XA_{i+1}, H_i, T_i, T$
E2 — $XA_i, x'_i, E$
E31 — P'
E32 — $X_{TOM}$
E3
E33 — $V_{3D}$
E34 — $PR_i$
E4 — $XA_i, PR''_i, PR_i, E''$
E5 — 3,12,13,2
E6 — $x_i, V_i, \Delta_i, H_i, PR'_i, V_{opt(i)}$
E7 — 4,12,13
E8 — $V_{opt(i)}, X_{opt(i)}$
E9 — $XA_i, X_{opt(i)}$
E10 — $X_{opt(i)}, P$

**Description**

L'invention concerne un procédé de fabrication d'une pièce à matière céramique photopolymérisée à l'aide d'une machine de fabrication additive, et une machine de fabrication additive.

Le domaine de l'invention concerne les aubes de turbines haute pression de turbomachines aéronautiques.

Les turbines haute pression sont des pièces complexes qui nécessitent un système de refroidissement efficace pour fonctionner correctement.

On connaît les aubes de ces turbines de l'ancienne génération, qui sont fabriquées en fonderie à cire perdue et intègrent un circuit de refroidissement réalisé grâce à un noyau en céramique. En effet, les noyaux des aubes de l'ancienne génération sont réalisés par procédé d'injection céramique et donc doivent avoir une géométrie démoulable.

A la différence des aubes de l'ancienne génération, les aubes de nouvelle génération comportent des noyaux céramiques réalisés par fabrication additive afin de permettre une grande liberté de géométries.

Une machine de fabrication additive réalise le dépôt de plusieurs couches d'une matière à photopolymériser selon des images de tranchage de la géométrie tridimensionnelle de la pièce à fabriquer.

Ces images de tranchage sont utilisées par la machine pour avoir la géométrie des différentes couches à imprimer successivement.

L'utilisation de ces images de tranchage par la machine de fabrication additive présente toutefois les inconvénients suivants.

La discrétisation en images de tranchage peut amener des artéfacts sur la pièce finale et des imprécisions sur la géométrie. La cause de ces écarts entre la production et la définition est la limite de la résolution de l'élément de polymérisation de la machine (la source d'énergie lumineuse et le système de projection amenant à une taille de pixel spécifique), l'interaction entre les différentes couches, ainsi que la diffraction de la lumière sur les particules de céramique en suspension dans le bain à polymériser.

Un objectif de l'invention est d'obtenir un procédé de fabrication d'une pièce à matière céramique photopolymérisée à l'aide d'une machine de fabrication additive, une machine de fabrication additive et une machine de contrôle non-destructif tel un tomographe ou autre, qui pallient les inconvénients mentionnés ci-dessus.

A cet effet, un premier objet de l'invention est un procédé de fabrication d'une pièce à matière céramique photopolymérisée à l'aide d'une machine de fabrication additive, laquelle reçoit N premières images bidimensionnelles de consigne géométrique de N tranches de photopolymérisation sélective dans N plans superposés de dépôt d'une matière céramique photopolymérisable,
caractérisé en ce que le procédé comporte les étapes suivantes, mises en œuvre par au moins un calculateur :

   entraînement d'un premier réseau de neurones sur les N premières images bidimensionnelles de consigne des N tranches de photopolymérisation, pour apprendre à reconstruire les N premières images bidimensionnelles en N deuxièmes images bidimensionnelles, pour minimiser un premier écart calculé entre les N deuxièmes images bidimensionnelles et les N premières images bidimensionnelles,
   obtention de N troisièmes images de la matière de pièces de test à matière céramique photopolymérisée et ayant des caractéristiques géométriques réelles prescrites dans les N plans superposés,
   entraînement d'un deuxième réseau de neurones sur les N premières images bidimensionnelles de consigne des N tranches de photopolymérisation, pour apprendre les N troisièmes images,
   correction, à partir d'au moins une partie du premier réseau de neurones ayant été entraîné et à partir du deuxième réseau de neurones ayant été entraîné, d'au moins une des N premières images bidimensionnelles de consigne des N tranches de photopolymérisation, appelée quatrième image, dans au moins un plan déterminé parmi les N plans superposés en au moins une cinquième image bidimensionnelle corrigée de consigne de la au moins une tranche déterminée de la matière céramique photopolymérisable dans le au moins un plan déterminé,
   la machine de fabrication additive fabriquant la pièce à matière céramique photopolymérisée en déposant et photopolymérisant les N tranches de photopolymérisation dans les N plans superposés de dépôt de la matière céramique suivant les N premières images bidimensionnelles de consigne, dont la au moins une quatrième image bidimensionnelle de consigne de la au moins une tranche déterminée de la matière céramique photopolymérisable dans le au moins un plan déterminé a été remplacée par la au moins une cinquième image bidimensionnelle corrigée de consigne de la au moins une tranche déterminée de la matière céramique photopolymérisable dans le au moins un plan déterminé.

Grâce à l'invention, la géométrie de la pièce qui sera produite à partir de la (ou des) images corrigée(s) est parfaitement conforme à l'image de consigne. On résout ainsi les irrégularités de la machine de fabrication additive, par exemple dans le cas de la LCM (fabrication de céramiques par lithographie) la diffraction de la lumière sur les particules de céramique. L'invention assure ainsi un pré-traitement des images tranchées, devant être envoyées à la machine de fabrication additive, ce pré-traitement permettant de compenser à l'avance les erreurs liées au procédé de fabrication additive.

Suivant un mode de réalisation de l'invention, le procédé comporte en outre, pour effectuer la correction :

la formation d'un troisième réseau de neurones, comportant en cascade la partie du premier réseau de neurones ayant été entraîné et le deuxième réseau de neurones ayant été entraîné,
pour ladite au moins une quatrième image bidimensionnelle de consigne de la au moins une tranche déterminée de la matière céramique photopolymérisable dans le au moins un plan déterminé parmi les N plans superposés, l'optimisation respectivement d'au moins un vecteur aléatoire envoyé au troisième réseau de neurones, en minimisant un deuxième écart calculé entre la au moins une quatrième image bidimensionnelle de consigne de la au moins une tranche déterminée de la matière céramique photopolymérisable dans le au moins un plan déterminé et une sixième image, qui a été obtenue par le troisième réseau de neurones à partir du au moins un vecteur aléatoire, pour obtenir au moins un vecteur aléatoire optimisé,
la formation d'un quatrième réseau de neurones comportant la partie du premier réseau de neurones ayant été entraîné,
l'application du au moins un vecteur aléatoire optimisé au quatrième réseau de neurones, pour obtenir la au moins une cinquième image bidimensionnelle corrigée de consigne de la au moins une tranche déterminée de la matière céramique photopolymérisable dans le au moins un plan déterminé.

Suivant un mode de réalisation de l'invention, le procédé comporte en outre

la fabrication, par la machine de fabrication additive, des pièces de test à matière céramique photopolymérisée et ayant les caractéristiques géométriques réelles prescrites,
l'obtention par tomographie de représentations tridimensionnelles tomographiques des pièces de test,
la projection des représentations tridimensionnelles tomographiques dans les N plans superposés pour obtenir les N troisièmes images de la matière des pièces de test.

Suivant un mode de réalisation de l'invention, la partie du premier réseau de neurones comporte un premier décodeur du premier réseau de neurones.

Suivant un mode de réalisation de l'invention, le premier réseau de neurones comporte en outre un premier encodeur, situé en amont du premier décodeur.

Suivant un mode de réalisation de l'invention, le premier réseau de neurones comporte un premier auto-encodeur variationnel, lequel comporte en cascade un premier encodeur, un module de calcul variationnel et le premier décodeur.

Suivant un mode de réalisation de l'invention, l'entraînement d'un premier réseau de neurones est effectué sur les N premières images bidimensionnelles de consigne des N tranches de photopolymérisation appliquées à une entrée du premier encodeur du premier réseau de neurones, pour apprendre à reconstruire les N premières images bidimensionnelles en les N deuxièmes images bidimensionnelles, qui sont calculées par le premier réseau de neurones à partir des N premières images bidimensionnelles et qui sont présentes sur une sortie du premier décodeur du premier réseau de neurones, les N deuxièmes images bidimensionnelles étant calculées par le premier réseau de neurones pour minimiser le premier écart calculé entre les N deuxièmes images bidimensionnelles et les N premières images bidimensionnelles.

Suivant un mode de réalisation de l'invention, le premier écart est une première entropie croisée binaire calculée entre les N deuxièmes images bidimensionnelles et les N premières images bidimensionnelles.

Suivant un mode de réalisation de l'invention, le deuxième réseau de neurones comporte un deuxième auto-encodeur, lequel comporte en cascade un deuxième encodeur et un deuxième décodeur.

Suivant un mode de réalisation de l'invention, l'entraînement du deuxième réseau de neurones est effectué sur les N premières images bidimensionnelles de consigne des N tranches de photopolymérisation appliquées à une entrée du deuxième encodeur du deuxième réseau de neurones, pour apprendre les N troisièmes images à une sortie du deuxième encodeur du deuxième réseau de neurones.

Suivant un mode de réalisation de l'invention, le troisième réseau de neurones comporte en cascade le module de calcul variationnel, le premier décodeur ayant été entraîné et le deuxième réseau de neurones ayant été entraîné.

Suivant un mode de réalisation de l'invention, l'optimisation est effectuée pour la au moins une quatrième image bidimensionnelle de consigne de la au moins une tranche déterminée de la matière céramique photopolymérisable dans le au moins un plan déterminé parmi les N plans superposés, pour optimiser respectivement le au moins un vecteur aléatoire envoyé à une entrée du module de calcul variationnel du troisième réseau de neurones, en minimisant un deuxième écart calculé entre la au moins une quatrième image bidimensionnelle de consigne de la au moins une tranche déterminée de la matière céramique photopolymérisable dans le au moins un plan déterminé et une sixième image, qui a été obtenue à la sortie du deuxième encodeur du troisième réseau de neurones à partir du au moins un vecteur aléatoire, pour obtenir le au moins un vecteur aléatoire optimisé à l'entrée du module de calcul variationnel du troisième réseau de neurones.

Suivant un mode de réalisation de l'invention, le quatrième réseau de neurones comporte en cascade le module de calcul variationnel et le premier décodeur ayant été entraîné.

Suivant un mode de réalisation de l'invention, l'application du au moins un vecteur aléatoire optimisé est effectuée à l'entrée du module de calcul variationnel du quatrième réseau de neurones, pour obtenir sur la sortie du premier décodeur du quatrième réseau de neurones la au moins une cinquième image bidimensionnelle corrigée de consigne de la au moins une tranche déterminée de la matière céramique photopolymérisable dans le au moins un plan déterminé.

Suivant un mode de réalisation de l'invention, lors de l'entraînement du premier réseau de neurones, le premier encodeur apprend une première distribution normale multivariée de chacune des N premières images bidimensionnelles de consigne des N tranches de photopolymérisation appliquées à l'entrée du premier encodeur du premier réseau de neurones.

Suivant un mode de réalisation de l'invention, le deuxième écart est égal à une mesure d'indice de similarité structurelle calculé entre la au moins une quatrième image bidimensionnelle de consigne de la au moins une tranche déterminée de la matière céramique photopolymérisable dans le au moins un plan déterminé et la sixième image, qui a été obtenue à une sortie du troisième réseau de neurones à partir du au moins un vecteur aléatoire.

Suivant un mode de réalisation de l'invention, le deuxième écart est égal à un indice de Sørensen-Dice calculé entre la au moins une quatrième image bidimensionnelle de consigne de la au moins une tranche déterminée de la matière céramique photopolymérisable dans le au moins un plan déterminé et la sixième image, qui a été obtenue à une sortie du troisième réseau de neurones à partir du au moins un vecteur aléatoire.

Suivant un mode de réalisation de l'invention, le deuxième écart est égal à un indice de Jaccard calculé entre la au moins une quatrième image bidimensionnelle de consigne de la au moins une tranche déterminée de la matière céramique photopolymérisable dans le au moins un plan déterminé et la sixième image, qui a été obtenue à une sortie du troisième réseau de neurones à partir du au moins un vecteur aléatoire.

Suivant un mode de réalisation de l'invention, l'entraînement du deuxième réseau de neurones est effectué pour qu'à partir des N premières images bidimensionnelles de consigne des N tranches de photopolymérisation le deuxième réseau de neurones calcule N septièmes images, qui sont présentes sur une sortie du deuxième réseau de neurones et qui minimisent un troisième écart calculé entre les N septièmes images et les N troisièmes images.

Suivant un mode de réalisation de l'invention, le troisième écart est une troisième entropie croisée binaire calculée entre les N septièmes images et les N troisièmes images.

Un deuxième objet de l'invention est une machine de fabrication additive d'une pièce à matière céramique photopolymérisée, comportant au moins un calculateur configuré pour la mise en œuvre du procédé de fabrication tel que décrit ci-dessus.

L'invention sera mieux comprise à la lecture de la description qui va suivre, donnée uniquement à titre d'exemple non limitatif en référence aux figures ci-dessous des dessins annexés.

[Fig. 1] représente un synoptique modulaire d'un dispositif de fabrication suivant un mode de réalisation de l'invention.
[Fig. 2] représente un organigramme d'un procédé de fabrication suivant un mode de réalisation de l'invention.
[Fig. 3] représente une vue schématique en perspective d'un procédé de fabrication additive couche par couche d'une pièce.
[Fig. 4] représente un synoptique modulaire d'un premier réseau de neurones utilisé par le procédé et le dispositif de fabrication suivant un mode de réalisation de l'invention.
[Fig. 5] représente un synoptique modulaire du premier réseau de neurones utilisé par le procédé et le dispositif de fabrication suivant un mode de réalisation de l'invention.
[Fig. 6] représente un synoptique modulaire d'un deuxième réseau de neurones utilisé par le procédé et le dispositif de fabrication suivant un mode de réalisation de l'invention.
[Fig. 7] représente un synoptique modulaire d'un troisième réseau de neurones utilisé par le procédé et le dispositif de fabrication suivant un mode de réalisation de l'invention.
[Fig. 8] représente un synoptique modulaire d'un quatrième réseau de neurones utilisé par le procédé et le dispositif de fabrication suivant un mode de réalisation de l'invention.
[Fig. 9] représente un synoptique modulaire d'une couche convolutive de l'encodeur du premier réseau de neurones utilisé par le procédé et le dispositif de fabrication suivant un mode de réalisation de l'invention.
[Fig. 10] représente un synoptique modulaire d'une couche convolutive du décodeur du premier réseau de neurones utilisé par le procédé et le dispositif de fabrication suivant un mode de réalisation de l'invention.
[Fig. 11] représente un synoptique modulaire d'une couche convolutive de l'encodeur du deuxième réseau de neurones utilisé par le procédé et le dispositif de fabrication suivant un mode de réalisation de l'invention.
[Fig. 12] représente un synoptique modulaire d'une couche convolutive du décodeur du deuxième réseau de neurones utilisé par le procédé et le dispositif de fabrication suivant un mode de réalisation de l'invention.

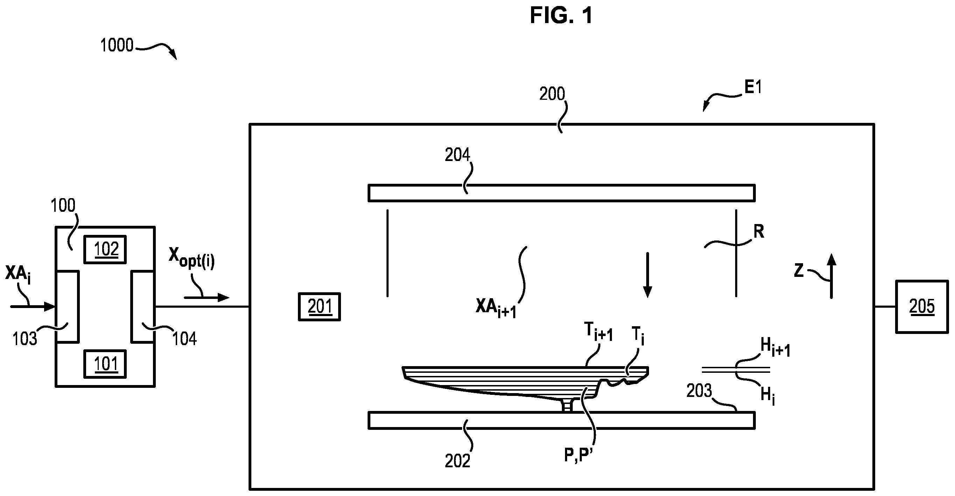

On décrit ci-dessous plus en détail en référence aux figures 1 à 12 un exemple de procédé de correction d'au moins une des images de consigne de tranches de photopolymérisation d'une matière céramique d'une machine, d'un procédé de fabrication additive d'une pièce P utilisant ce procédé de correction, d'un dispositif 1000 de correction pour sa mise en œuvre, d'un procédé de fabrication de la pièce P à matière céramique photopolymérisée à l'aide d'une machine 200 de fabrication additive, et une machine 200 de fabrication additive. La machine 200 de fabrication additive comporte un calculateur 100 configuré pour la mise en œuvre du procédé de fabrication.

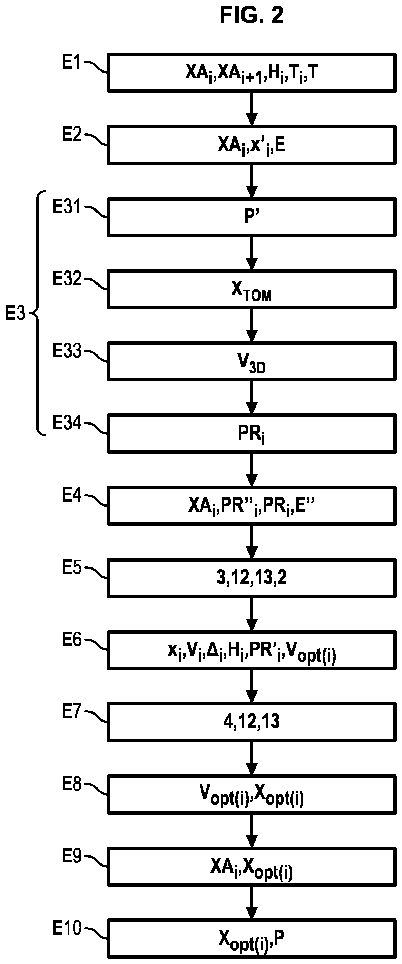

Aux figures 1 et 2, la machine 200 de fabrication additive et le procédé de fabrication additive permettent de fabriquer une pièce réelle P comportant une matière céramique en utilisant la photopolymérisation sélective de cette matière céramique. Le procédé de fabrication additive est également appelé impression tridimensionnelle, dite « impression 3D ». La machine 200 de fabrication additive est également appelée imprimante tridimensionnelle, dite « imprimante 3D. Un exemple de fabrication additive est la fabrication de céramiques par lithographie (en abrégé en anglais : Lithography-based ceramic manufacturing (LCM)). La machine 200 de fabrication additive comporte un dispositif 201 de dépôt ou distributeur 201 permettant de déposer des couches d'une matière céramique photopolymérisable, laquelle est liquide ou fluide dans une grande mesure. Cette matière céramique photopolymérisable peut être un mélange-maître photosensible chargé en particules céramiques, par exemple dans une cuve transparente. Ce mélange-maître peut être constitué d'un (ou plusieurs) monomère et/ou oligomère (par exemple sous la forme d'une résine) photosensible chargé en particules céramiques, pouvant être typiquement microniques, et de différents additifs (dispersants, solvants, photo-initiateur). Un rayonnement R de photopolymérisation sélective permet de photopolymériser la matière céramique photopolymérisable dans certaines zones formant une tranche, pour ainsi solidifier la matière céramique dans les zones de cette tranche.

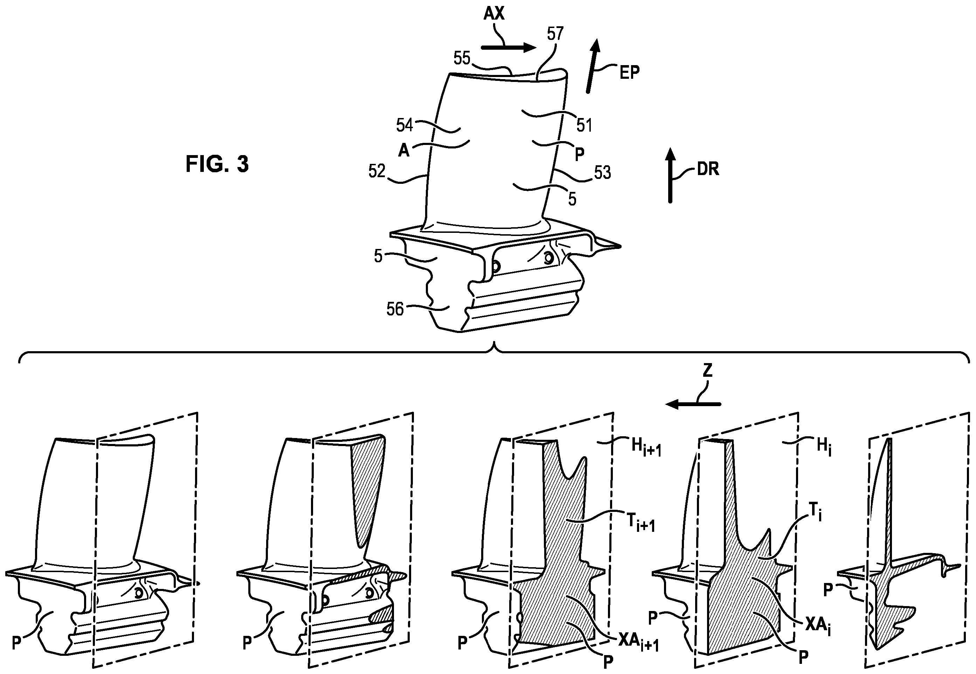

Ainsi que représenté à titre d'exemple à la figure 3, chaque tranche $T_i$ doit correspondre à une vue en coupe de la pièce réelle P dans un plan $H_i$. La machine 200 de fabrication additive est configurée pour imprimer N tranches $T_i$ de la matière céramique ayant été photopolymérisées successivement dans respectivement N plans superposés $H_i$, pour i étant un entier naturel allant de 1 à N, où N est un entier naturel supérieur ou égal à 2, et par exemple supérieur ou égal à 10. Les N tranches $T_i$ de la matière céramique ayant été photopolymérisées sont reliées l'une à l'autre.

La machine 200 de fabrication additive comporte un plateau 202 d'impression permettant d'imprimer par le distributeur 201 et par un dispositif 204 d'émission du rayonnement R ou projecteur 204 du rayonnement R de photopolymérisation sélective les N tranches $T_i$ de la matière céramique ayant été photopolymérisées successivement sur le plateau 202 d'impression dans respectivement les N plans superposés $H_i$, qui sont parallèles à un plan 203 de base du plateau 202 d'impression, ce plan 203 de base pouvant être horizontal. Le projecteur 204 comprend un bloc optique ayant des lentilles et un dispositif de correction optique du rayonnement R.

Au cours d'une première étape E1 du procédé de fabrication additive mis en œuvre à l'aide de la machine 200 de fabrication additive, le calculateur 100 reçoit N premières images $XA_i$ bidimensionnelles (également appelées images tranchées $XA_j$) de consigne de la géométrie des N tranches $T_i$ de photopolymérisation dans les N plans superposés $H_i$ de dépôt de la matière céramique. Ces N premières images $XA_i$ bidimensionnelles peuvent avoir été générées au préalable par un autre calculateur et être reçues sur une interface d'entrée du calculateur 100. Ou ces N premières images $XA_i$ bidimensionnelles peuvent avoir été générées par le calculateur 100. Ces N premières images $XA_i$ bidimensionnelles peuvent être enregistrées au cours de l'étape E1 dans la mémoire permanente 101 du calculateur 100.

Pour chaque tranche $T_i$, le projecteur 204 projette le rayonnement R de photopolymérisation pendant un temps d'exposition T (pouvant être typiquement inférieur à une seconde) selon la première image $XA_i$ bidimensionnelle de consigne géométrique, qui est une image des zones où doit se trouver la matière céramique de la pièce à fabriquer dans le plan $H_i$ de dépôt de cette matière céramique. Ainsi, la matière céramique n'est photopolymérisée que dans les zones désignées par la première image $XA_i$ bidimensionnelle de consigne géométrique dans le plan $H_i$ de dépôt de cette matière céramique, c'est-à-dire selon la tranche $T_i$. La matière céramique non photopolymérisée dans le plan $H_i$ de dépôt de la matière céramique est évacuée. La polymérisation de la matière céramique photopolymérisable piège les particules céramiques dans le réseau polymère nouvellement formé.

Suivant un mode de réalisation de l'invention, chacune des premières images $XA_i$ bidimensionnelles de consigne de la géométrie des N tranches $T_i$ de photopolymérisation est binaire. Ainsi, chacun des pixels de chacune des premières images $XA_i$ bidimensionnelles de consigne de la géométrie des N tranches $T_i$ de photopolymérisation est égale soit à un bit 1 de présence de photopolymérisation, provoquant la photopolymérisation de la matière céramique photopolymérisable à l'endroit visé par ce pixel dans la tranche $T_i$, soit à un bit 0 d'absence de photopolymérisation, provoquant l'absence de photopolymérisation de la matière céramique photopolymérisable à l'endroit visé par ce pixel dans la tranche $T_i$. Bien entendu, chacun des pixels des premières images $XA_i$ bidimensionnelles et de l'image bidimensionnelle corrigée $X_{opt(i)}$ (ou des images bidimensionnelles corrigées $X_{opt(i)}$) pourrait ne pas être binaire et pourrait comporter d'autres valeurs comprises dans l'intervalle $]0 ; 1[$ ou le bit 0 ou le bit 1.

Une fois la tranche $T_i$ imprimée dans le plan $H_i$ selon la première image $XA_i$ bidimensionnelle de consigne géométrique, la machine 200 de fabrication additive déplace le distributeur 201 et le projecteur 204 du rayonnement R de photopolymérisation sélective l'un par rapport à l'autre dans la direction Z perpendiculaire au plan $H_i$, pour passer d'un plan

$H_i$ au plan $H_{i+1}$ directement superposé sur ce plan $H_i$ et pour imprimer la tranche suivante $T_{i+1}$ dans le plan $H_{i+1}$ selon la première image $XA_{i+1}$ bidimensionnelle suivante de consigne géométrique correspondant à la tranche suivante $T_{i+1}$. La première image $XA_{i+1}$ bidimensionnelle suivante de consigne géométrique correspondant à la tranche suivante $T_{i+1}$ dans le plan suivant $H_{i+1}$ peut avoir des zones de matière céramique photopolymérisée, qui sont différentes et/ou décalées et/ou communes par rapport aux zones de matière céramique photopolymérisée de la première image $XA_i$ bidimensionnelle de consigne géométrique correspondant à la tranche Ti dans le plan Hi, pour réaliser des courbures de la matière céramique photopolymérisée par rapport à la direction Z perpendiculaire au plan Hi et pour être reliées l'une à l'autre.

Dans chaque plan Hi, chaque tranche Ti peut avoir une épaisseur contrôlée par le distributeur 201, l'épaisseur étant prise selon la direction Z perpendiculaire au plan Hi. Chaque tranche Ti peut avoir une épaisseur identique ou différente par rapport aux autres tranches Ti. Dans chaque plan Hi, chaque tranche Ti peut avoir une épaisseur typiquement comprise entre 25 $\mu$m et 100 $\mu$m.

Le projecteur 204 peut illuminer sélectivement les zones correspondant à la première image $XA_i$ bidimensionnelle de consigne géométrique de la tranche $T_i$ de photopolymérisation dans le plan $H_i$ grâce à un dispositif à micro-miroirs numériques. L'impression est réitérée autant de fois qu'il y a de tranches $T_i$ à polymériser pour former la pièce finale P. Il peut être prévu un traitement thermique pour éliminer le liant et fritter la pièce P, afin d'obtenir la pièce P à céramique solide, durable et de haute densité.

La pièce réelle P à fabriquer par la machine 200 d'impression additive peut être par exemple un noyau d'aube A de turbine de turbomachine aéronautique, une aube A de turbine haute pression de turbomachine aéronautique. Bien entendu, la pièce réelle P à fabriquer par la machine 200 d'impression additive pourrait être une autre partie d'une turbomachine aéronautique. La pièce P pourrait être une pièce faisant partie d'une turbomachine d'aéronef, notamment d'avion. La pièce pourrait être par exemple un secteur d'anneau de turbine haute pression de la turbomachine, une aube de la turbomachine, notamment une aube de turbine basse pression, un noyau d'aube de turbine, un distributeur d'air de la turbomachine, une chambre de combustion de la turbomachine, ou autres. La pièce réelle P à fabriquer peut être un noyau de fonderie céramique à la cire perdue.

Un exemple d'un noyau d'une telle aube A de turbine haute pression de turbomachine aéronautique comme pièce P est représenté à la figure 3. Le noyau d'aube A a un corps 51 en un matériau réfractaire ayant un bord 52 d'attaque et un bord 53 de fuite, entre lesquels le corps 51 s'étend suivant une première direction longitudinale AX, un extrados 54 et un intrados 55, entre lesquels le corps 51 s'étend suivant une deuxième direction EP d'épaisseur, qui est transversale (par exemple perpendiculaire) à la première direction AX, un pied 56 d'aube et une première surface 57 de tête d'aube, entre lesquels le corps 51 s'étend suivant une troisième direction DR de hauteur, transversale (par exemple perpendiculaire) aux première et deuxième directions AX, EP, le pied 56 d'aube ayant pour fonction la fixation sur un moyeu rotatif longitudinal de la turbine.

Suivant un mode de réalisation de l'invention, la direction Z perpendiculaire au plan Hi s'étend du bord 53 de fuite au bord 52 d'attaque, c'est-à-dire à l'encontre de la première direction longitudinale AX ainsi que représenté à la figure 3, ou s'étend du bord 52 d'attaque au bord 53 de fuite, c'est-à-dire dans la première direction longitudinale AX.

L'invention prévoit un procédé de correction d'au moins une image $XA_j$, dite image $XA_j$ à corriger, parmi les N premières images $XA_i$ bidimensionnelles de consigne géométrique des N tranches de photopolymérisation sélective dans les N plans superposés $H_i$ de dépôt de la matière céramique photopolymérisable de la machine de fabrication additive de la pièce P ayant la matière céramique photopolymérisable. Le procédé de correction est mis en œuvre par un (ou plusieurs) calculateur 100. Bien entendu, le procédé de correction peut être effectué pour corriger plusieurs images $XA_j$ parmi les N premières images $XA_i$ bidimensionnelles de consigne géométrique des N tranches de photopolymérisation sélective dans les N plans superposés $H_i$ de dépôt de la matière céramique photopolymérisable ou toutes les N premières images $XA_i$ bidimensionnelles de consigne géométrique des N tranches de photopolymérisation sélective dans les N plans superposés $H_i$ de dépôt de la matière céramique photopolymérisable. Le procédé de fabrication de la pièce P à matière céramique photopolymérisée à l'aide de la machine 200 de fabrication additive comporte le procédé de correction.

Le calculateur 100 peut être ou comporter un (ou plusieurs) ordinateur(s), un (ou plusieurs) processeur(s), un (ou plusieurs) microprocesseur(s), un (ou plusieurs) circuit(s) de commande, un ou plusieurs serveurs, une ou plusieurs machines, ou autres. Le calculateur 100 peut avoir été programmé par un programme d'ordinateur, comportant des instructions de code pour la mise en œuvre du procédé, lorsqu'il est mis en œuvre sur ce calculateur 100. Ainsi, l'invention concerne une machine de fabrication additive 200 d'une pièce P à matière céramique photopolymérisée, comportant au moins un calculateur 100 programmé par le programme d'ordinateur, comportant des instructions de code pour la mise en œuvre du procédé de fabrication, lorsque le procédé de fabrication est mis en œuvre sur ce calculateur 100. Le calculateur 100 peut comprendre une ou plusieurs mémoires permanentes 101, une ou plusieurs mémoires vives 102. Le calculateur 100 peut comprendre une ou plusieurs interfaces physiques 103 d'entrée de données, une ou plusieurs interfaces physiques 104 de sortie de données. Cette ou ces interfaces physiques 103 d'entrée de données peuvent être ou comprendre un ou plusieurs claviers d'ordinateur, une ou plusieurs souris d'ordinateur, un ou plusieurs ports physiques de communication de données, un ou plusieurs écrans tactiles, ou autres. Cette ou ces interfaces physiques 104 de sortie de données peuvent être ou comprendre un ou plusieurs ports physiques de communication de données, un ou plusieurs écrans, ou autres. Un programme d'ordinateur peut être enregistré et exécuté sur le calculateur 100 et comporter des instructions de code, qui lorsqu'elles sont exécutées sur celui-ci, mettent en œuvre tout ou partie du procédé suivant l'invention.

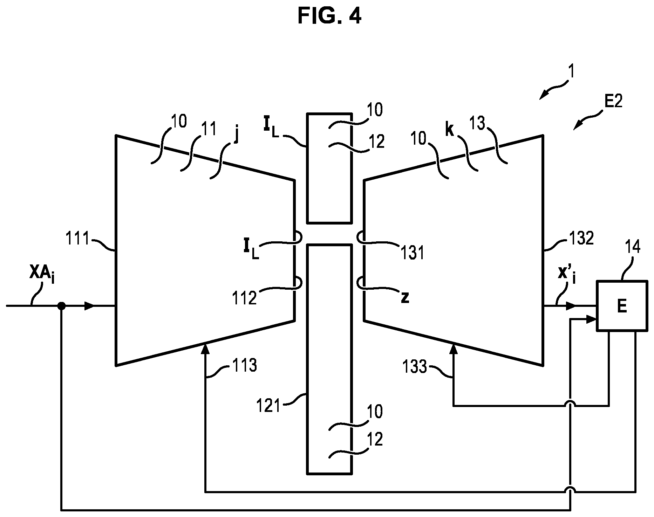

A la figure 4, le calculateur 100 comporte un premier réseau 1 de neurones.

Au cours d'une étape E2 du procédé, qui est postérieure à la première étape E1 et qui est appelée deuxième étape E2 à la figure 2, le calculateur 100 entraîne le premier réseau 1 de neurones sur les N premières images $XA_i$ bidimensionnelles de consigne des N tranches $T_i$ de photopolymérisation, pour apprendre à reconstruire les N premières images $XA_i$ bidimensionnelles en respectivement N deuxièmes images $x_i'$ bidimensionnelles. Le calculateur 100 entraîne le premier réseau 1 de neurones pour que chacune des N deuxièmes images $x_i'$ bidimensionnelles apprenne à reconstruire respectivement chacune des N premières images $XA_i$ bidimensionnelles.

Suivant un mode de réalisation de l'invention, aux figures 4, 5 et 9, le calculateur 100 entraîne, au cours de l'étape E2, le premier réseau 1 de neurones sur les N premières images $XA_i$ bidimensionnelles de consigne des N tranches de photopolymérisation, qui sont appliquées à l'entrée 111 du premier réseau 1 de neurones. La sortie 132 du premier réseau 1 de neurones fournit chacune des N deuxièmes images $x_i'$ bidimensionnelles qui sont calculées par le premier réseau 1 de neurones à partir de respectivement chacune des N premières images $XA_i$ bidimensionnelles présente sur l'entrée 111.

On décrit ci-dessous un mode de réalisation de cet apprentissage. Le calculateur 100 entraîne le premier réseau 1 de neurones pour minimiser un premier écart E calculé entre chacune des N deuxièmes images $x_i'$ bidimensionnelles et respectivement chacune des N premières images $XA_i$ bidimensionnelles. Le premier réseau 1 de neurones peut comporter ainsi un premier estimateur 14 du premier écart E calculé entre chacune des N deuxièmes images $x_i'$ bidimensionnelles et respectivement chacune des N premières images $XA_i$ bidimensionnelles. Au cours de l'entraînement du premier réseau 1 de neurones par le calculateur 100, le premier estimateur 14 modifie les paramètres de contrôle du premier réseau 1 de neurones pour minimiser le premier écart E calculé entre chacune des N deuxièmes images $x_i'$ bidimensionnelles et respectivement chacune des N premières images $XA_i$ bidimensionnelles.

Au cours d'une étape E3 du procédé, qui est postérieure ou antérieure à la deuxième étape E2 et qui est appelée troisième étape E3, à la figure 2, le calculateur 100 obtient N troisièmes images $PR_i$ de la matière de pièces P' de test à matière céramique photopolymérisée et ayant des caractéristiques géométriques réelles prescrites dans les N plans superposés $H_i$.

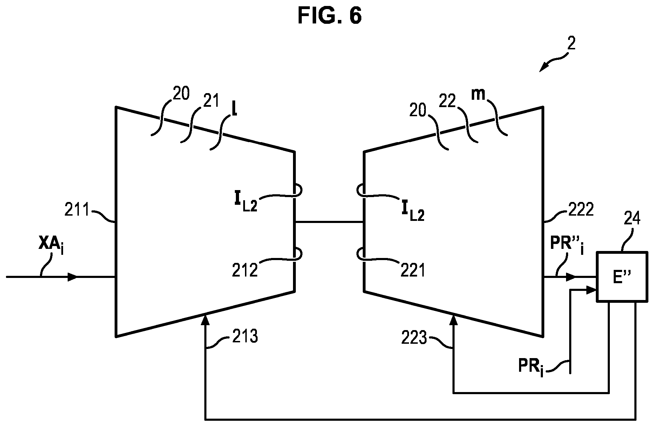

A la figure 6, le calculateur 100 comporte un deuxième réseau 2 de neurones.

Au cours d'une étape E4 du procédé, qui est postérieure à la troisième étape E3 et qui est appelée quatrième étape E4 à la figure 2, le calculateur 100 entraîne le deuxième réseau 2 de neurones sur les N premières images $XA_i$ bidimensionnelles de consigne des N tranches $T_i$ de photopolymérisation, pour apprendre les N troisièmes images $PR_i$. Suivant un mode de réalisation de l'invention, le calculateur 100 entraîne le deuxième réseau 2 de neurones à partir des N premières images $XA_i$ bidimensionnelles de consigne des N tranches de photopolymérisation, qui sont appliquées à l'entrée 211 du deuxième réseau 2 de neurones, pour apprendre les N troisièmes images $PR_i$ à la sortie 222 du deuxième réseau 2 de neurones.

On décrit ci-dessous un mode de réalisation de cet apprentissage E4. La sortie 222 du deuxième réseau 2 de neurones fournit chacune des N septièmes images $PR_i''$, qui sont calculées par le deuxième réseau 2 de neurones à partir de respectivement chacune des N premières images $XA_i$ bidimensionnelles de consigne des N tranches de photopolymérisation présente sur l'entrée 211. Le calculateur 100 entraîne le deuxième réseau 2 de neurones pour que chacune des N septièmes images $PR_i''$ apprenne à reconstruire respectivement chacune des N troisièmes images $PR_i$. Ainsi, le calculateur 100 entraîne le deuxième réseau 2 de neurones pour minimiser un troisième écart E" calculé entre chacune des N septièmes images $PR_i''$ et respectivement chacune des N troisièmes images $PR_i$. Le premier réseau 1 de neurones peut comporter ainsi un deuxième estimateur 24 du troisième écart E" calculé entre chacune des N septièmes images $PR_i''$ et respectivement chacune des N troisièmes images $PR_i$. Ainsi le deuxième réseau 2 de neurones apprend à minimiser l'erreur de reconstruction E". Ainsi, le deuxième réseau 2 de neurones apprend l'effet du procédé de fabrication additive. Au cours de l'entraînement du deuxième réseau 2 de neurones par le calculateur 100, le deuxième estimateur 24 modifie les paramètres de contrôle du deuxième réseau 2 de neurones pour minimiser le troisième écart E" calculé entre chacune des N septièmes images $PR_i''$ et respectivement chacune des N troisièmes images $PR_i$.

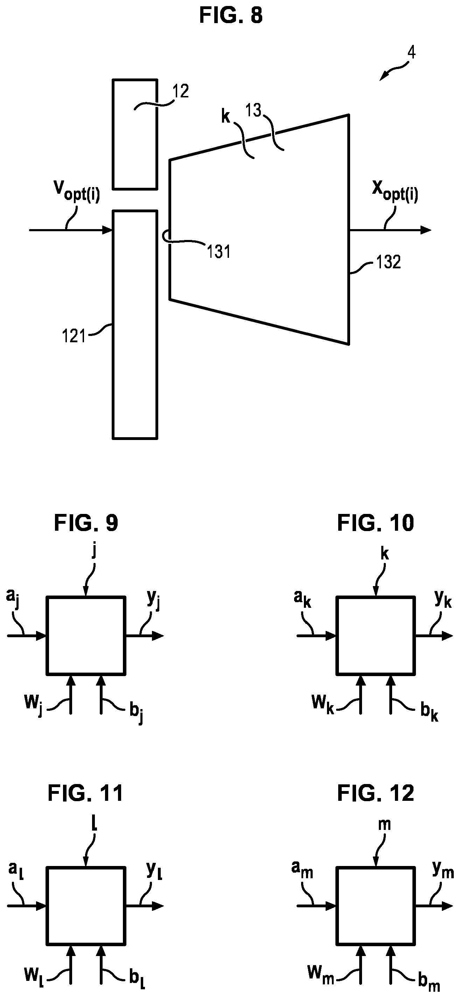

Suivant un mode de réalisation de l'invention, au cours d'une étape E8 du procédé, qui est postérieure à la quatrième étape E4 aux figures 2 et 8, le calculateur 100 corrige, à partir d'au moins une partie 13 du premier réseau 1 de neurones ayant été entraîné et à partir du deuxième réseau 2 de neurones ayant été entraîné, au moins une des N premières images $XA_i$ bidimensionnelles de consigne des N tranches $T_i$ de photopolymérisation dans au moins un plan déterminé $H_i$ parmi les N plans superposés $H_i$ en au moins une cinquième image bidimensionnelle corrigée $X_{opt(i)}$ de consigne de la au moins une tranche déterminée $T_i$ de la matière céramique photopolymérisable dans le au moins un plan déterminé $H_i$.

Suivant un mode de réalisation de l'invention, au cours d'une étape E8 du procédé, qui est postérieure à la quatrième étape E4 aux figures 2 et 8, le calculateur 100 corrige, à partir du premier réseau 1 de neurones ayant été entraîné et à partir du deuxième réseau 2 de neurones ayant été entraîné, au moins une des N premières images $XA_i$

bidimensionnelles de consigne des N tranches $T_i$ de photopolymérisation dans au moins un plan déterminé $H_i$ parmi les N plans superposés $H_i$ en au moins une cinquième image bidimensionnelle corrigée $X_{opt(i)}$ de consigne de la au moins une tranche déterminée $T_i$ de la matière céramique photopolymérisable dans le au moins un plan déterminé $H_i$.

Cette au moins une des N premières images $XA_i$ bidimensionnelles de consigne qui est corrigée est appelée au moins une quatrième image $x_i$ bidimensionnelle de consigne de la au moins une tranche $T_i$ de photopolymérisation dans le au moins un plan déterminé $H_i$ parmi les N plans superposés $H_i$. Ainsi, il peut être prévu comme quatrième image $x_i$ bidimensionnelle de consigne de la au moins une tranche $T_i$ de photopolymérisation dans le au moins un plan déterminé $H_i$ une des ou plusieurs des ou toutes les N premières images $XA_i$ bidimensionnelles de consigne des N tranches $T_i$ de photopolymérisation dans un des ou plusieurs des ou tous les N plans déterminés $H_i$. Ainsi, il peut être prévu une ou plusieurs ou N quatrièmes images $x_i$ bidimensionnelles de consigne d'une des, de plusieurs des ou de toutes les N tranches $T_i$ de photopolymérisation dans un des ou plusieurs des ou tous les N plan déterminés $H_i$. Ainsi, il peut être prévu une ou plusieurs ou N cinquièmes images bidimensionnelles corrigées $X_{opt(i)}$ de consigne d'une des, de plusieurs des ou de toutes les N tranches $T_i$ de photopolymérisation dans un des ou plusieurs des ou tous les N plan déterminés $H_i$.

Au cours d'une étape E10 du procédé de fabrication, qui est postérieure à l'étape E8 à la figure 2, la machine 200 de fabrication additive fabrique la pièce P à matière céramique photopolymérisée en déposant et photopolymérisant les N tranches $T_i$ de photopolymérisation dans les N plans superposés $H_i$ de dépôt de la matière céramique suivant les N premières images $XA_i$ bidimensionnelles de consigne, dont la au moins une quatrième image $x_i$ bidimensionnelle de consigne de la au moins une tranche déterminée $T_i$ de la matière céramique photopolymérisable dans le au moins un plan déterminé $H_i$ a été remplacée par la au moins une cinquième image bidimensionnelle corrigée $X_{opt(i)}$ de consigne de la au moins une tranche déterminée $T_i$) de la matière céramique photopolymérisable dans le au moins un plan déterminé $H_i$.

L'invention permet de fabriquer les pièces P sur le plateau 202 par la machine 200 de fabrication additive en maximisant leur production. L'invention permet de réduire le temps de fabrication. L'invention permet d'imprimer des cavités de faible dimension par la machine 200 de fabrication additive.

Le procédé suivant l'invention comprend ainsi un algorithme de traitement des images tranchées $XA_j$ permettant d'obtenir une correction anticipée de ces images tranchées $XA_j$, qui seront ensuite envoyées à la machine 200 de fabrication additive pour fabriquer la pièce réelle P. Le procédé et le dispositif suivant l'invention garantissent ainsi une meilleure qualité dimensionnelle de la fabrication additive de la pièce P par la machine 200 de fabrication additive. Le procédé et le dispositif suivant l'invention permettent de modifier à l'avance dans la (ou les) cinquième image bidimensionnelle corrigée $X_{opt(i)}$, la (ou les) images tranchées $XA_j$, qui seront ensuite envoyées à la machine 200 de fabrication additive pour fabriquer la pièce réelle P et permet de corriger à l'avance les irrégularités telles que par exemple des coins arrondis et des lignes plus ou moins larges que celles de l'image $x_i$ de consigne dans la (ou les) tranche $T_i$ déterminée. Le procédé et le dispositif suivant l'invention permettent d'anticiper des déviations de forme et de taille de la fabrication additive, et ce en appliquant des corrections sur la (ou les) images tranchées $XA_j$. Le procédé et le dispositif suivant l'invention permettent de mieux résoudre les géométries des pièces P ayant la matière céramique. Le procédé et le dispositif suivant l'invention permettent d'imprimer des cavités de faible dimension par la machine 200 de fabrication additive. Le procédé et le dispositif suivant l'invention permettent d'obtenir une précision sub-pixel (inférieure à la dimension d'un pixel). Le procédé et le dispositif suivant l'invention permettent de minimiser l'impact de la diffraction du rayonnement R de photopolymérisation sélective sur les particules de céramique lors de la fabrication additive. Le procédé et le dispositif suivant l'invention permettent d'apprendre les phénomènes physiques tels que la diffraction du rayonnement R de photopolymérisation sélective sur les particules de céramique lors de la fabrication additive et son impact sur la pièce fabriquée P. Une fois fabriquée par la machine 200 de fabrication additive, l'erreur dimensionnelle de la pièce fabriquée P minimise une erreur dimensionnelle par rapport à la (ou les) image $x_i$ de consigne.

Suivant un mode de réalisation de l'invention, la partie 13 du premier réseau 1 de neurones est une partie 13 aval du premier réseau 1 de neurones. La partie 13 du premier réseau 1 de neurones est en aval d'une partie amont 11 du premier réseau 1 de neurones, dans le sens allant de l'entrée 111 du premier réseau 1 de neurones à la sortie 132 du premier réseau 1 de neurones. Suivant un mode de réalisation de l'invention, la partie 13 du premier réseau 1 de neurones comporte un premier décodeur 13 du premier réseau 1 de neurones. Suivant un mode de réalisation de l'invention, le premier réseau 1 de neurones comporte en outre un premier encodeur 11, situé en amont du premier décodeur 13. Suivant un mode de réalisation de l'invention, le premier réseau 1 de neurones est convolutif. Le premier encodeur 11 compresse chacune des N premières images $XA_i$ bidimensionnelles de consigne des N tranches de photopolymérisation, qui sont appliquées à l'entrée 111 du premier encodeur 11 du premier réseau 1 de neurones, en une première image latente $I_L$, qui a une dimension (nombre de pixels) inférieure à la dimension (nombre de pixels) de la première images $XA_i$ bidimensionnelle de consigne et qui est présente sur la sortie 112 de ce premier encodeur 11. Le premier décodeur 13 décompresse chacun des premiers vecteurs z de variables latentes appliqué à l'entrée 131 du premier décodeur 13 du premier réseau 1 de neurones en la deuxième image $x_i'$ bidimensionnelle, qui a une dimension (nombre de pixels) supérieure à la dimension (nombre de composantes) du premier vecteur z de variables latentes et qui est appliquée à la sortie 132 du premier décodeur 13 du premier réseau 1 de neurones. La sortie 132 du premier décodeur 13 du premier réseau 1 de neurone a une dimension égale à celle de l'entrée 111 du premier encodeur 11 du premier réseau 1 de neurone. Suivant un mode de réalisation de l'invention, le premier réseau 1 de neurones comporte un premier auto-encodeur variationnel 10. Suivant un mode de réalisation de l'invention, le premier auto-encodeur variationnel 10 comporte en cascade le premier encodeur 11, un module 12 de calcul variationnel et le premier décodeur 13. Le module 12 de calcul variationnel transforme chaque première image latente $I_L$, qui est présente sur la sortie 112 du premier encodeur 11 du premier réseau 1 de neurones en le premier vecteur z de variables latentes, qui est appliqué à l'entrée 131 du premier décodeur 13 du premier réseau 1 de neurones. Ces modes de réalisation peuvent être combinés l'un avec l'autre.

Suivant un mode de réalisation de l'invention, aux figures 4, 5 et 9, le calculateur 100 entraîne, au cours de l'étape E2, le premier réseau 1 de neurones sur les N premières images $XA_i$ bidimensionnelles de consigne des N tranches de photopolymérisation, qui sont appliquées à l'entrée 111 du premier encodeur 11 du premier réseau 1 de neurones. La sortie 132 du premier décodeur 13 du premier réseau 1 de neurones fournit chacune des N deuxièmes images $x_i'$ bidimensionnelles qui sont calculées par le premier réseau 1 de neurones à partir de respectivement chacune des N premières images $XA_i$ bidimensionnelles présente sur l'entrée 111. Les N deuxièmes images $x_i'$ bidimensionnelles sont calculées par le premier réseau 1 de neurones pour minimiser le premier écart E calculé entre les N deuxièmes images $x_i'$ bidimensionnelles et les N premières images $XA_i$ bidimensionnelles.

Suivant un mode de réalisation de l'invention, aux figures 4, 5 et 9, le premier encodeur 11 comporte différents neurones j ayant chacun des poids $W_j$ variables et des biais $b_j$ variables. Ces neurones sont arrangés dans des couches convolutives, appelées également « feature maps » en anglais. Chaque neurone j du premier encodeur 11 calcule la sortie $y_j$ de ce neurone j en multipliant l'entrée $a_j$ de ce neurone j par le poids $W_j$ de ce neurone j et en ajoutant le biais $b_j$ de ce neurone j, puis en appliquant la fonction L d'activation du premier réseau 1 de neurones, selon l'équation

$$y_j = L(a_j.W_j+b_j).$$

Les poids $W_j$ variables et des biais $b_j$ variables sont les paramètres 113 de contrôle du premier encodeur 11. La fonction L d'activation du premier réseau 1 de neurones peut être une rectification linéaire (connue sous ReLU), ou une sigmoïde, ou une tangente hyperbolique, ou autre.

Suivant un mode de réalisation de l'invention, aux figures 4, 5, 7, 8 et 10, le premier décodeur 13 comporte différents neurones k ayant chacun des poids $W_k$ variables et des biais $b_k$ variables. Chaque neurone k du premier décodeur 13 calcule la sortie $y_k$ de ce neurone k en multipliant l'entrée $a_k$ de ce neurone k par le poids $W_k$ de ce neurone k et en ajoutant le biais $b_k$ de ce neurone k, puis en appliquant la fonction L d'activation du premier réseau 1 de neurones, selon l'équation

$$y_k = L(a_k.W_k+b_k).$$

Les poids $W_k$ variables et des biais $b_k$ variables sont les paramètres 133 de contrôle du premier décodeur 13. La fonction L d'activation du premier réseau 1 de neurones peut être une rectification linéaire (connue sous ReLU), ou une sigmoïde, ou une tangente hyperbolique, ou autre.

Suivant un mode de réalisation de l'invention, au cours d'une première sous-étape E31 de l'étape E3 du procédé, la machine 200 de fabrication additive fabrique les pièces P' de test ayant la matière céramique photopolymérisée et ayant les caractéristiques géométriques réelles prescrites. Les pièces P' de test sont en la même matière que la pièce P. Les pièces P' sont des pièces de la même famille que la pièce P et ayant le même degré de complexité.

Selon une première approche, ces pièces P' de test sont des parties de la pièce P, ces parties servant d'éprouvettes représentatives contenant les caractéristiques géométriques des pièces finales P visées. Ces pièces P' de test peuvent être plusieurs parties séparées de géométries différentes. Ces parties sont de plus petite taille que la pièce P, ce qui permet de les fabriquer sur le plateau 202 par la machine 200 de fabrication additive en maximisant leur production, par exemple en fabriquant simultanément plusieurs parties séparées de géométries différentes, tout en réduisant le temps de fabrication. Ces pièces P' de test peuvent avoir des géométries expérimentales afin de prédire comment ces géométries expérimentales seront imprimées par la machine 200 de fabrication additive. Ces pièces P' de test peuvent être des parties d'une aube de turbine haute pression de turbomachine aéronautique dans l'exemple mentionné ci-dessus.

Selon une deuxième approche, ces pièces P' de test correspondent aux pièces réelles P à fabriquer, c'est-à-dire peuvent être des noyaux d'aubes de turbine haute pression de turbomachine aéronautique dans l'exemple mentionné ci-dessus des aubes P de turbine haute pression de turbomachine aéronautique.

Une forte interaction existe entre les différents paramètres de fabrication de la machine 200 de fabrication additive (par exemple : énergie du rayonnement R de photopolymérisation sélective émis par le projecteur 204, temps d'exposition T, compensation géométrique ou autres).

Au cours d'une deuxième sous-étape E32 de l'étape E3 du procédé, qui est postérieure à la première sous-étape E31, à la figure 2, on obtient par un dispositif 205 d'imagerie, pouvant être par exemple un tomographe (ou autre) des représentations tridimensionnelles tomographiques $X_{TOM}$ des pièces P' de test. Le dispositif 205 d'imagerie pourrait utiliser, au lieu d'un tomographe, un dispositif de mesure sans contact pour une géométrie non démoulable qui est observable sans recouvrement.

Au cours d'une troisième sous-étape E33 de l'étape E3 du procédé, qui est postérieure à la deuxième sous-étape E32 et au cours d'une quatrième sous-étape E34 de l'étape E3, qui est postérieure à la troisième sous-étape E33, à la figure 2, le calculateur 100 projette les représentations tridimensionnelles tomographiques $X_{TOM}$ pour acquérir N troisièmes images $PR_i$ de la matière des pièces P' de test respectivement dans les N plans superposés $H_i$.

Par exemple pour ce faire, au cours de la troisième sous-étape E33, à la figure 2, le calculateur 100 calcule à partir des représentations tridimensionnelles tomographiques $X_{TOM}$ un volume tridimensionnel $V_{3D}$ de la matière des pièces P' de test. Puis, au cours de la quatrième sous-étape E34, à la figure 2, le calculateur 100 segmente le volume tridimensionnel $V_{3D}$ de la matière des pièces P' de test pour isoler la matière et mettre en avant les régions d'intérêt. Au cours de la quatrième sous-étape E34, à la figure 2, le calculateur 100 projette le volume tridimensionnel $V_{3D}$ de la matière des pièces P' de test dans les N plans superposés $H_i$ pour acquérir les N troisièmes images $PR_i$ de la matière des pièces P' de test.

Le dispositif 205 d'imagerie tomographique est un dispositif de radiographie par transmission d'un rayonnement, par exemple de rayons X. Chaque représentation tridimensionnelle tomographique $X_{TOM}$ est une image de projection prise à différents angles de vue de la pièce P' de test. Chaque représentation tridimensionnelle tomographique $X_{TOM}$ est constituée de voxels et peut être constituée de plusieurs images bidimensionnelles prises dans des plans d'image traversant la pièce P' de test et distincts les uns des autres (parallèles entre eux ou non parallèles entre eux). La matière de la pièce P' de test est en un matériau semi-transparent au rayonnement du dispositif de radiographie, ici aux rayons X.

Suivant un mode de réalisation de l'invention, le deuxième réseau 2 de neurones comporte un deuxième auto-encodeur 20. Suivant un mode de réalisation de l'invention, le deuxième auto-encodeur 20 comporte en cascade un deuxième encodeur 21 et un deuxième décodeur 22. Suivant un mode de réalisation de l'invention, le deuxième réseau 2 de neurones est convolutif. Le deuxième encodeur 21 compresse chacune des N premières images $XA_i$ bidimension-nelles de consigne des N tranches de photopolymérisation, qui sont appliquées à l'entrée 211 du deuxième encodeur 21 du deuxième réseau 2 de neurones, en une deuxième image latente $I_{L2}$, qui a une dimension (nombre de pixels) inférieure à la dimension (nombre de pixels) de la première image $XA_i$ bidimensionnelle de consigne et qui est présente sur la sortie 212 de ce deuxième encodeur 21. Le deuxième décodeur 22 décompresse chacune des deuxième image latente $I_{L2}$, qui est présente sur la sortie 212 de ce deuxième encodeur 21 et sur l'entrée 221 de ce deuxième décodeur 22, en une septième image $PR_i''$, qui a une dimension (nombre de pixels) supérieure à la dimension (nombre de composantes) de la deuxième image latente $I_{L2}$ et qui est appliquée à la sortie 222 du deuxième décodeur 22 du deuxième réseau 2 de neurones. Dans le cas du deuxième réseau 2 de neurones convolutif, le deuxième réseau 2 de neurones comporte un enchaînement de couches convolutives pouvant être composées, selon un mode de réalisation: d'un noyau allant de 3x3 à 5x5 pixels ; d'une fonction d'activation (pouvant être une rectification linéaire (connue sous ReLU), ou une sigmoïde, ou une tangente hyperbolique, ou autre); d'un nombre de couches convolutives (nombre de fois où l'on pratique la convolution) enchaînées avec des couches de regroupement (également appelées pooling en anglais). Chaque couche de regroupement peut être un regroupement par la moyenne, par la valeur maximale, ou autre, et est caractérisée par la taille de la fenêtre de regroupement et la fonction de regroupement (maximum, minimum, moyenne, ou autre). Les couches de convolution servent à appliquer des filtres sur l'image et les couches de regroupement servent à réduire la dimension.

Suivant un mode de réalisation de l'invention, aux figures 6, 7 et 11, le deuxième encodeur 21 comporte différents neurones 1 ayant chacun des poids $W_l$ variables et des biais $b_l$ variables. Chaque neurone l du deuxième encodeur 21 calcule la sortie $y_l$ de ce neurone 1 en multipliant l'entrée $a_l$ de ce neurone l par le poids $W_l$ de ce neurone l et en ajoutant le biais $b_l$ de ce neurone 1, puis en appliquant la fonction L d'activation du premier réseau 1 de neurones, selon l'équation

$$y_l = L(a_l.W_l + b_l).$$

Les poids $W_l$ variables et des biais $b_l$ variables sont les paramètres 213 de contrôle du deuxième encodeur 21. La fonction L d'activation du premier réseau 1 de neurones peut être une rectification linéaire (connue sous ReLU), ou une sigmoïde, ou une tangente hyperbolique, ou autre.

Suivant un mode de réalisation de l'invention, aux figures 6, 7 et 12, le deuxième décodeur 22 comporte différents neurones m ayant chacun des poids $W_m$ variables et des biais $b_m$ variables. Chaque neurone m du deuxième décodeur 22 calcule la sortie $y_m$ de ce neurone m en multipliant l'entrée $a_m$ de ce neurone m par le poids $W_m$ de ce neurone m et en ajoutant le biais $b_m$ de ce neurone m, puis en appliquant la fonction L d'activation du premier réseau 1 de neurones, selon l'équation

$$y_m = L(a_m.W_m+b_m).$$

Les poids $W_m$ variables et des biais $b_m$ variables sont les paramètres 223 de contrôle du deuxième décodeur 22. La fonction L d'activation du premier réseau 1 de neurones peut être une rectification linéaire (connue sous ReLU), ou une sigmoïde, ou une tangente hyperbolique, ou autre.

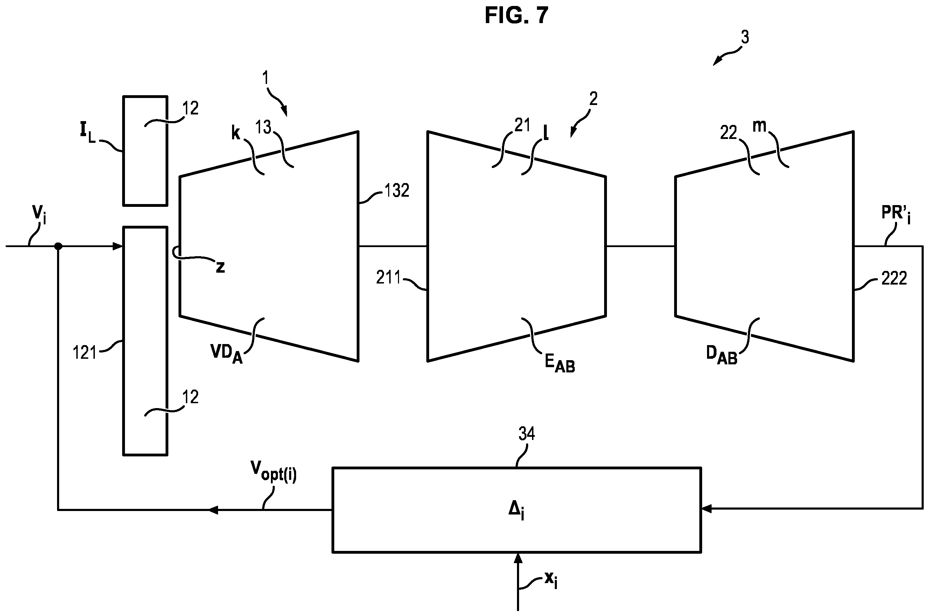

Au cours d'une étape E5 du procédé, qui est postérieure à la quatrième étape E4 et qui est appelée cinquième étape E5 aux figures 2 et 7, le calculateur 100 forme un troisième réseau 3 de neurones formé à partir du premier réseau 1 de neurones ayant été entraîné lors de l'étape E2 et à partir du deuxième réseau 2 de neurones ayant été entraîné lors de l'étape E2. Suivant un mode de réalisation de l'invention, le calculateur 100 forme lors de la quatrième étape E4 le troisième réseau 3 de neurones comportant en cascade le premier décodeur 13 du premier réseau 1 de neurones ayant été entraîné lors de l'étape E2 et le deuxième réseau 2 de neurones ayant été entraîné lors de l'étape E2.

Suivant un mode de réalisation de l'invention, le calculateur 100 forme, au cours de l'étape E5 postérieure à l'étape E4 et appelée cinquième étape E5 aux figures 2 et 7, le troisième réseau 3 de neurones comportant en cascade la partie 13 du premier réseau 1 de neurones ayant été entraîné lors de l'étape E2 et le deuxième réseau 2 de neurones ayant été entraîné lors de l'étape E4. Dans ce troisième réseau 3 de neurones, le deuxième réseau 2 de neurones peut comporter en cascade le deuxième encodeur 21 ayant été entraîné lors de l'étape E4 et le deuxième décodeur 22 ayant été entraîné lors de l'étape E4. Suivant un mode de réalisation de l'invention, le calculateur 100 forme au cours de l'étape E5 le troisième réseau 3 de neurones comportant en cascade le module 12 de calcul variationnel, le premier décodeur 13 ayant été entraîné lors de l'étape E2 et le deuxième réseau 2 de neurones ayant été entraîné lors de l'étape E4 et comportant en cascade le deuxième encodeur 21 ayant été entraîné lors de l'étape E4 et le deuxième décodeur 22 ayant été entraîné lors de l'étape E4. Dans le troisième réseau 3 de neurones, la sortie 132 du premier réseau 1 de neurones ayant été entraîné lors de l'étape E2 ou , la sortie 132 du premier décodeur 13 du premier réseau 1 de neurones ayant été entraîné lors de l'étape E2 est reliée à l'entrée 211 deuxième réseau 2 de neurones ayant été entraîné lors de l'étape E4 à l'entrée 211 du deuxième encodeur 21 ayant été entraîné lors de l'étape E4.

Suivant un mode de réalisation de l'invention, au cours d'une étape E6 du procédé, qui est postérieure à la cinquième étape E5 et qui est appelée sixième étape E6 aux figures 2 et 7, le calculateur 100 prescrit au moins une (ou plusieurs ou toutes les) quatrième image $x_i$ bidimensionnelle de consigne de la au moins une (ou plusieurs ou toutes les) tranche déterminée $T_i$ de la matière céramique photopolymérisable dans le au moins un (ou plusieurs ou tous les) plan déterminé $H_i$ parmi les N plans superposés $H_i$. La (ou les) quatrième image $x_i$ bidimensionnelle de consigne peut avoir été préenregistrée dans la mémoire 101 du calculateur 100. La (ou les) quatrième image $x_i$ bidimensionnelle de consigne peut être une image ayant été obtenue par conception assistée par ordinateur ou autres. La quatrième image $x_i$ bidimensionnelle de consigne est une image de référence.

Suivant un mode de réalisation de l'invention, le calculateur 100 optimise au cours de l'étape E6 respectivement au moins un vecteur aléatoire $V_i$ envoyé au troisième réseau 3 de neurones, en minimisant un deuxième écart $\Delta_i$ calculé entre la au moins une quatrième image $x_i$ bidimensionnelle de consigne de la au moins une tranche déterminée $T_i$ de la matière céramique photopolymérisable dans le au moins un plan déterminé $H_i$ et une sixième image $PR_i{}'$, qui a été obtenue par le troisième réseau 3 de neurones à partir du au moins un vecteur aléatoire $V_i$, pour obtenir au moins un vecteur aléatoire optimisé $V_{opt(i)}$.

Suivant un mode de réalisation de l'invention, le calculateur 100 applique au cours de l'étape E6 le vecteur aléatoire $V_i$ à l'entrée 121 du troisième réseau 3 de neurones. La sortie 222 du troisième réseau 3 de neurones fournit la sixième image $PR_i{}'$, qui a été calculée par le troisième réseau 3 de neurones à partir du vecteur aléatoire $V_i$ présent sur l'entrée 121 du troisième réseau 3 de neurones. Le calculateur 100 optimise pour chaque quatrième image $x_i$ bidimensionnelle de consigne dans le plan déterminé $H_i$ respectivement le vecteur aléatoire $V_i$ envoyé à l'entrée 121 du troisième réseau 3 de neurones.

Suivant un mode de réalisation de l'invention, le calculateur 100 applique au cours de l'étape E6 le vecteur aléatoire $V_i$ à l'entrée 121 du module 12 de calcul variationnel du troisième réseau 3 de neurones. La sortie 222 du deuxième encodeur 21 du troisième réseau 3 de neurones fournit la sixième image $PR_i{}'$, qui a été calculée par le troisième réseau 3 de neurones à partir du vecteur aléatoire $V_i$ présent sur l'entrée 121 du module 12 de calcul variationnel du troisième réseau 3 de neurones. Le calculateur 100 optimise pour chaque quatrième image $x_i$ bidimensionnelle de consigne dans le plan déterminé $H_i$ respectivement le vecteur aléatoire $V_i$ envoyé à l'entrée 121 du module 12 de calcul variationnel du troisième réseau 3 de neurones.

Suivant un mode de réalisation de l'invention, le calculateur 100 optimise au cours de l'étape E6 le vecteur aléatoire $V_i$ en minimisant le deuxième écart $\Delta_i$ calculé entre la quatrième image $x_i$ bidimensionnelle de consigne de la tranche déterminée $T_i$ de la matière céramique photopolymérisable dans le plan déterminé $H_i$ et la sixième image $PR_i{}'$, pour obtenir ainsi un vecteur aléatoire optimisé $V_{opt(i)}$ à l'entrée 121 du troisième réseau 3 de neurones. Le troisième réseau 3 de neurones peut comporter ainsi un troisième estimateur 34 du deuxième écart $\Delta_i$ calculé entre la quatrième image $x_i$ bidimensionnelle de consigne de la tranche déterminée $T_i$ de la matière céramique photopolymérisable dans le

plan déterminé $H_i$ et la sixième image $PR_i$'. La sixième image $PR_i$' est une image obtenue par le troisième réseau 3 de neurones. Au cours de l'optimisation, le troisième estimateur 34 modifie le vecteur aléatoire $V_i$ envoyé à l'entrée 121 du troisième réseau 3 de neurones pour minimiser le deuxième écart $\Delta_i$ calculé entre la quatrième image $x_i$ bidimensionnelle de consigne de la tranche déterminée $T_i$ de la matière céramique photopolymérisable dans le plan déterminé $H_i$ et la sixième image $PR_i$' et déterminer le vecteur aléatoire optimisé $V_{opt(i)}$. On a ainsi une boucle d'optimisation sur le vecteur $V_i$. Le calculateur 100 peut essayer plusieurs vecteurs aléatoires $V_i$ pour chaque quatrième image $x_i$ bidimensionnelle de consigne dans le plan déterminé $H_i$. Un, plusieurs ou tous les vecteurs aléatoires optimisés $V_{opt(i)}$ peut être déterminé par le calculateur 100 pour une des, plusieurs des ou toutes les quatrièmes images $x_i$ bidimensionnelles de consigne, c'est-à-dire pour une des ou plusieurs des ou toutes les tranches $T_i$ de la matière céramique photopolymérisable dans un des ou plusieurs des ou tous les N plans superposés $H_i$. Dans le mode de réalisation décrit ci-dessus, ce ou ces vecteurs aléatoires $V_i$ pour chaque quatrième image $x_i$ bidimensionnelle de consigne dans le plan déterminé $H_i$, sont échantillonnés depuis la première image latente $I_L$ et le premier vecteur $z$ de variables latentes.

Au cours d'une étape E7 du procédé, qui est postérieure à la deuxième étape E2 ou à la sixième étape E6 et qui est appelée septième étape E7 aux figures 2 et 8, le calculateur 100 forme un quatrième réseau 4 de neurones à partir du premier réseau 1 de neurones ayant été entraîné lors de l'étape E2. Le quatrième réseau 4 de neurones comporte la partie 13 du premier réseau 1 de neurones ayant été entraîné. Suivant un mode de réalisation de l'invention, le calculateur 100 forme au cours de l'étape E7 le quatrième réseau 4 de neurones comportant le premier décodeur 13 ayant été entraîné lors de l'étape E2.

Suivant un mode de réalisation de l'invention, le calculateur 100 forme au cours de l'étape E7 le quatrième réseau 4 de neurones comportant en cascade le module 12 de calcul variationnel et le premier décodeur 13 ayant été entraîné lors de l'étape E2.

Suivant un mode de réalisation de l'invention, au cours de l'étape E8 du procédé, qui est postérieure à la septième étape E7 et qui est appelée huitième étape E8 aux figures 2 et 8, le calculateur 100 applique le au moins un vecteur aléatoire optimisé $V_{opt(i)}$ au quatrième réseau 4 de neurones, pour obtenir la au moins une cinquième image bidimensionnelle corrigée $X_{opt(i)}$ de contrôle consigne de la au moins une tranche déterminée $T_i$ de la matière céramique photopolymérisable dans le au moins un plan déterminé $H_i$.

Suivant un mode de réalisation de l'invention, le calculateur 100 applique le vecteur aléatoire optimisé $V_{opt(i)}$ à l'entrée 121 du module 12 de calcul variationnel du quatrième réseau 4 de neurones. Le quatrième réseau 4 de neurones calcule sur la sortie 132 du premier décodeur 13 du quatrième réseau 3 de neurones à partir du ( ou des) vecteur aléatoire optimisé $V_{opt(i)}$ présent à l'entrée 121 du module 12 de calcul variationnel du quatrième réseau 4 de neurones la (ou les) cinquième image bidimensionnelle corrigée $X_{opt(i)}$ de consigne de la (ou des) tranche déterminée $T_i$ de la matière céramique photopolymérisable dans le (ou les) plan déterminé $H_i$. La cinquième image bidimensionnelle corrigée $X_{opt(i)}$ de consigne peut être calculée par le quatrième réseau 4 de neurones pour une des, plusieurs des ou tous les vecteurs aléatoires optimisés $V_{opt(i)}$, c'est-à-dire pour une des ou plusieurs des ou toutes les tranches $T_i$ de la matière céramique photopolymérisable dans un des ou plusieurs des ou tous les N plans superposés $H_i$.

Au cours d'une étape E9 du procédé, qui est postérieure à la huitième étape E8 et qui est appelée neuvième étape E9 à la figure 2 ou au cours de la huitième étape E8, le calculateur 100 remplace l'image $XA_j$ à corriger, c'est-à-dire la au moins une quatrième image $x_i$ bidimensionnelle de consigne de la au moins une tranche $T_i$ de photopolymérisation dans le au moins un plan déterminé $H_i$ parmi les N plans superposés $H_i$, par la au moins une cinquième image bidimensionnelle corrigée $X_{opt(i)}$ de consigne de la au moins une tranche déterminée $T_i$ de la matière céramique photopolymérisable dans le au moins un plan déterminé $H_i$.. Une des, plusieurs des ou toutes les cinquièmes images bidimensionnelles corrigées $X_{opt(i)}$ de consigne peut être déterminée par le calculateur 100 pour une des, plusieurs des ou toutes les quatrièmes images $x_i$ bidimensionnelles de consigne, c'est-à-dire pour une des ou plusieurs des ou toutes les tranches $T_i$ de la matière céramique photopolymérisable dans un des ou plusieurs des ou tous les N plans superposés $H_i$. Les étapes E2 à E9 forment ainsi un procédé de correction de la au moins une image $XA_j$ à corriger en la au moins une cinquième image bidimensionnelle corrigée $X_{opt(i)}$ de consigne de la tranche $T_i$ déterminée de la matière céramique photopolymérisable dans le plan déterminé $H_i$.

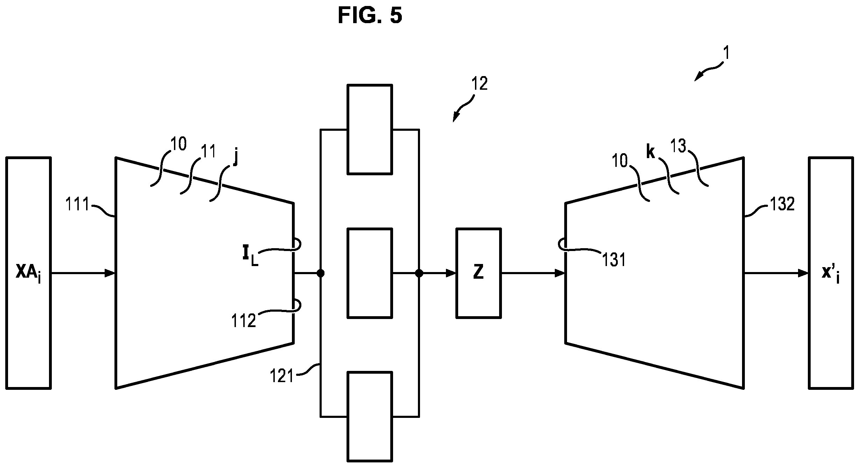

Suivant un mode de réalisation de l'invention, aux figures 4 et 5, lors de l'entraînement lors de la deuxième étape E2 du premier réseau 1 de neurones, le premier encodeur 11 apprend une première distribution normale multivariée $N(\mu, \sigma^2))$ de chacune des N premières images $XA_i$ bidimensionnelles de contrôle de chacune des N tranches de photopolymérisation appliquées à l'entrée 111 du premier encodeur 11 du premier réseau 1 de neurones.

Suivant un mode de réalisation de l'invention, le deuxième écart $\Delta_i$ est égal à une mesure d'indice de similarité structurelle SSIM calculé respectivement entre la (ou les) quatrième image $x_i$ bidimensionnelle de consigne de la (ou des) tranche déterminée $T_i$ de la matière céramique photopolymérisable dans le (ou les) plan déterminé $H_i$ et la (ou les) sixième image $PR_i$', qui a été obtenue à la sortie 222 du deuxième encodeur 21 du troisième réseau 3 de neurones à partir du (ou des) vecteur aléatoire $V_i$.

Suivant un mode de réalisation de l'invention, le vecteur aléatoire optimisé $V_{opt(i)}$. est égal à

$$V_{opt(i)}.= \text{argmin } f(V_i) = SSIM(x_i - D_{\Lambda B}(E_{\Lambda B}(VD_\Lambda(z)))).$$

Suivant un mode de réalisation de l'invention, la mesure d'indice de similarité structurelle SSIM calculé est égal à SSIM(x, $x_b$) selon l'équation ci-dessous :

$$SSIM(x, x_b) = \frac{\left(2\mu_{x_b}\mu_x + c_1\right)\left(2\sigma_{x_b}\sigma_x + c_2\right)\left(cov_{x_b x} + c_3\right)}{\left(\mu_{x_b}^2 + \mu_x^2 + c_1\right)\left(\sigma_{x_b}^2 + \sigma_x^2 + c_2\right)\left(\sigma_{x_b}\sigma_x + c_3\right)}$$

où

$\mu_x$ est une moyenne calculée des pixels de la quatrième image $x_i$ bidimensionnelle de consigne de la tranche déterminée $T_i$ de la matière céramique photopolymérisable dans le plan déterminé $H_i$,

$\sigma_x$ est un écart-type calculé des pixels de la quatrième image $x_i$ bidimensionnelle de consigne de la tranche déterminée $T_i$ de la matière céramique photopolymérisable dans le plan déterminé $H_i$,

$\mu_{xb}$ est une moyenne calculée des pixels de la sixième image $PR_i'$,

$\sigma_{xb}$ est un écart-type calculé des pixels de la sixième image $PR_i'$,

$cov_{xbx}$ est la covariance calculée entre les pixels de la quatrième image $x_i$ bidimensionnelle de consigne de la tranche déterminée $T_i$ de la matière céramique photopolymérisable dans le plan déterminé $H_i$ et les pixels de la sixième image $PR_i'$,

$$c_1 = (k_1 L)^2, c_2 = (k_2 L)^2 \text{ et } c_3 = \frac{c_2}{2}$$

$c_1$, $c_2$ et $c_3$ sont des constantes prescrites, L étant la valeur maximale d'un pixel. Par défaut, $k_1$=0.01 et $k_2$=0.03.

Suivant un autre mode de réalisation de l'invention, le deuxième écart $\Delta_i$ est égal à un indice s de Sørensen-Dice calculé respectivement entre la (ou les) quatrième image $x_i$ bidimensionnelle de consigne de la (ou des) tranche déterminée $T_i$ de la matière céramique photopolymérisable dans le (ou les) plan déterminé $H_i$ et la (ou les) sixième image $PR_i'$, qui a été obtenue à la sortie 222 du deuxième encodeur 21 du troisième réseau 3 de neurones à partir du (ou des) vecteur aléatoire $V_i$.

Suivant un mode de réalisation de l'invention, l'indice s de Sørensen-Dice calculé est égal à s selon l'équation ci-dessous :

Pour des ensembles finis quelconques X et Y, l'indice s s'exprime par

$$s = \frac{2|X \cap Y|}{|X| + |Y|}$$

Ici, |X| désigne le nombre d'éléments de X. Ici, |Y| désigne le nombre d'éléments de Y. Ici, $|X \cap Y|$ désigne le nombre d'éléments de $X \cap Y$.

Par exemple, l'indice s est égal à :

$$s = \frac{2 \times \sum_i \sum_j I\left(s_{ij} \neq 0 \text{ et } PR_{ij}' \neq 0\right)}{\sum_i \sum_j I\left(s_{ij} \neq 0\right) + \sum_i \sum_j I\left(PR_{ij}' \neq 0\right)}$$

Suivant un autre mode de réalisation de l'invention, le deuxième écart $\Delta_i$ est égal à un indice J de Jaccard calculé respectivement entre la (ou les) quatrième image $x_i$ bidimensionnelle de consigne de la (ou des) tranche déterminée $T_i$ de la matière céramique photopolymérisable dans le (ou les) plan déterminé $H_i$ et la (ou les) sixième image $PR_i''$, qui a été obtenue à la sortie 222 du deuxième encodeur 21 du troisième réseau 3 de neurones à partir du (ou des) vecteur aléatoire $V_i$.

Suivant un mode de réalisation de l'invention, l'indice s de Jaccard calculé est égal à J(A, B) selon l'équation ci-dessous :

$$J(A, B) = \frac{|A \cap B|}{|A \cup B|}$$

Suivant un mode de réalisation de l'invention, le premier écart E est une première entropie croisée binaire H(XA$_i$, x$_i$') calculée entre chaque deuxième image x$_i$' bidimensionnelle et chaque première image XA$_i$ bidimensionnelle. De même, le troisième écart E" est une troisième entropie croisée binaire H(PRi", PRi) calculée entre chaque septième image PRi" et chaque troisième image PRi.

Suivant un mode de réalisation de l'invention, la première entropie croisée binaire H(XAi, xi') calculée entre chaque deuxième image xi' bidimensionnelle et chaque première image XAi bidimensionnelle; ainsi que la troisième entropie croisée binaire H(PRi", PRi) calculée entre chaque septième image PRi" et chaque troisième image PRi sont obtenues suivant le principe suivant.

Par définition, l'entropie croisée binaire H(X, Y) entre une image X et une image Y mesure la différence entre la distribution de probabilité de chaque pixel dans l'image X et l'image Y. Pour obtenir une valeur de probabilité, on normalise la valeur de chaque pixel dans les images X et Y en divisant la valeur de chaque pixel par la somme de chaque pixel des images respectives.

$$H(X, Y) = \sum_{i=0}^{n} P(x_i) \times \log(Q(x_i))$$

Où n = nombre de pixels dans l'image

$P(x_i)$ : probabilité associée à la valeur de l'image X

$Q(x_i)$ : probabilité associée à la valeur de l'image Y. Cette formule et cette définition pour H(X, Y) sont appliquées pour calculer la première entropie croisée binaire H(XAi, xi') et la troisième entropie croisée binaire H(PRi", PRi), en remplaçant X et Y par les images correspondantes mentionnées ci-dessus.

Bien entendu, les modes de réalisation, caractéristiques, possibilités et exemples décrits ci-dessus peuvent être combinés l'un avec l'autre ou être sélectionnés indépendamment l'un de l'autre.

**Revendications**

1. Procédé de fabrication d'une pièce (P) à matière céramique photopolymérisée à l'aide d'une machine (200) de fabrication additive, laquelle reçoit (E1) N premières images (XA$_i$) bidimensionnelles de consigne géométrique de N tranches (T$_i$) de photopolymérisation sélective dans N plans superposés (H$_i$) de dépôt d'une matière céramique photopolymérisable,

   **caractérisé en ce que** le procédé comporte les étapes suivantes, mises en œuvre par au moins un calculateur (100) :

   entraînement (E2) d'un premier réseau (1) de neurones sur les N premières images (XA$_i$) bidimensionnelles de consigne des N tranches (T$_i$) de photopolymérisation, pour apprendre à reconstruire les N premières images (XA$_i$) bidimensionnelles en N deuxièmes images (x$_i$') bidimensionnelles, pour minimiser un premier écart (E ) calculé entre les N deuxièmes images (x$_i$') bidimensionnelles et les N premières images (XA$_i$) bidimensionnelles,

   obtention (E3) de N troisièmes images (PR$_i$) de la matière de pièces (P') de test à matière céramique photopolymérisée et ayant des caractéristiques géométriques réelles prescrites dans les N plans superposés (H$_i$),

   entraînement (E4) d'un deuxième réseau (2) de neurones sur les N premières images (XA$_i$) bidimensionnelles de consigne des N tranches (T$_i$) de photopolymérisation, pour apprendre les N troisièmes images (PR$_i$),

   correction, à partir d'au moins une partie (13) du premier réseau (1) de neurones ayant été entraîné et à partir du deuxième réseau (2) de neurones ayant été entraîné, d'au moins une des N premières images (XA$_i$) bidimensionnelles de consigne des N tranches (T$_i$) de photopolymérisation, appelée quatrième image (x$_i$), dans au moins un plan déterminé (H$_i$) parmi les N plans superposés (H$_i$) en au moins une cinquième image bidimensionnelle corrigée (X$_{opt(i)}$) de consigne de la au moins une tranche déterminée (T$_i$) de la matière céramique photopolymérisable dans le au moins un plan déterminé (H$_i$),

   la machine (200) de fabrication additive fabriquant (E10) la pièce (P) à matière céramique photopolymérisée en déposant et photopolymérisant les N tranches (T$_i$) de photopolymérisation dans les N plans superposés (H$_i$) de dépôt de la matière céramique suivant les N premières images (XA$_i$) bidimensionnelles de consigne, dont la au moins une quatrième image (x$_i$) bidimensionnelle de consigne de la au moins une tranche déterminée (T$_i$) de la matière céramique photopolymérisable dans le au moins un plan déterminé (H$_i$) a été remplacée par la au moins une cinquième image bidimensionnelle corrigée ($X_{opt(i)}$) de consigne de la au moins une tranche déterminée ($T_i$) de la matière céramique photopolymérisable dans le au moins un plan déterminé ($H_i$).

2. Procédé suivant la revendication 1, **caractérisé en ce qu'**il comporte en outre, pour effectuer la correction :

la formation (E5) d'un troisième réseau (3) de neurones, comportant en cascade la partie (13) du premier réseau (1) de neurones ayant été entraîné et le deuxième réseau (2) de neurones ayant été entraîné, pour ladite au moins une quatrième image ($x_i$) bidimensionnelle de consigne de la au moins une tranche déterminée ($T_i$) de la matière céramique photopolymérisable dans le au moins un plan déterminé ($H_i$) parmi les N plans superposés ($H_i$), l'optimisation (E6) respectivement d'au moins un vecteur aléatoire ($V_i$) envoyé au troisième réseau (3) de neurones, en minimisant un deuxième écart ($\Delta_i$) calculé entre la au moins une quatrième image ($x_i$) bidimensionnelle de consigne de la au moins une tranche déterminée ($T_i$) de la matière céramique photopolymérisable dans le au moins un plan déterminé ($H_i$) et une sixième image ($PR_i$'), qui a été obtenue par le troisième réseau (3) de neurones à partir du au moins un vecteur aléatoire ($V_i$), pour obtenir au moins un vecteur aléatoire optimisé ($V_{opt(i)}$), la formation (E7) d'un quatrième réseau (4) de neurones comportant la partie (13) du premier réseau (1) de neurones ayant été entraîné, l'application du au moins un vecteur aléatoire optimisé ($V_{opt(i)}$) au quatrième réseau (4) de neurones, pour obtenir la au moins une cinquième image bidimensionnelle corrigée ($X_{opt(i)}$) de consigne de la au moins une tranche déterminée ($T_i$) de la matière céramique photopolymérisable dans le au moins un plan déterminé ($H_i$).

3. Procédé suivant l'une quelconque des revendications précédentes, **caractérisé en ce qu'**il comporte en outre

la fabrication (E3, E31), par la machine (200) de fabrication additive, des pièces (P') de test à matière céramique photopolymérisée et ayant les caractéristiques géométriques réelles prescrites, l'obtention (E3, E32) par tomographie de représentations tridimensionnelles tomographiques ($X_{TOM}$) des pièces (P') de test, la projection (E3, E33, E34) des représentations tridimensionnelles tomographiques ($X_{TOM}$) dans les N plans superposés ($H_i$) pour obtenir les N troisièmes images ($PR_i$) de la matière des pièces (P') de test.

4. Procédé suivant l'une quelconque des revendications précédentes, **caractérisé en ce que** la partie (13) du premier réseau (1) de neurones comporte un premier décodeur (13) du premier réseau (1) de neurones.

5. Procédé suivant la revendication 4, **caractérisé en ce que** le premier réseau (1) de neurones comporte en outre un premier encodeur (11), situé en amont du premier décodeur (13).

6. Procédé suivant la revendication 5, **caractérisé en ce que** l'entraînement (E2) d'un premier réseau (1) de neurones est effectué sur les N premières images ($XA_i$) bidimensionnelles de consigne des N tranches ($T_i$) de photopolymérisation appliquées à une entrée (111) du premier encodeur (11) du premier réseau (1) de neurones, pour apprendre à reconstruire les N premières images ($XA_i$) bidimensionnelles en les N deuxièmes images ($x_i$') bidimensionnelles, qui sont calculées par le premier réseau (1) de neurones à partir des N premières images ($XA_i$) bidimensionnelles et qui sont présentes sur une sortie (132) du premier décodeur (13) du premier réseau (1) de neurones, les N deuxièmes images ($x_i$') bidimensionnelles étant calculées par le premier réseau (1) de neurones pour minimiser le premier écart (E) calculé entre les N deuxièmes images ($x_i$') bidimensionnelles et les N premières images ($XA_i$) bidimensionnelles.

7. Procédé suivant l'une quelconque des revendications précédentes, **caractérisé en ce que** le premier écart (E) est une première entropie croisée binaire ($H(XA_i), x_i$')) calculée entre les N deuxièmes images ($x_i$') bidimensionnelles et les N premières images ($XA_i$) bidimensionnelles.

8. Procédé suivant l'une quelconque des revendications précédentes, **caractérisé en ce que** le deuxième réseau (2) de neurones comporte un deuxième auto-encodeur (20), lequel comporte en cascade un deuxième encodeur (21) et un deuxième décodeur (22).

9. Procédé suivant la revendication 8, **caractérisé en ce que** l'entraînement (E4) du deuxième réseau (2) de neurones est effectué sur les N premières images ($XA_i$) bidimensionnelles de consigne des N tranches ($T_i$) de photopolymérisation appliquées à une entrée (211) du deuxième encodeur (21) du deuxième réseau (2) de neurones, pour apprendre les N troisièmes images ($PR_i$) à une sortie (222) du deuxième encodeur (21) du deuxième réseau (2) de neurones.

10. Procédé suivant l'une quelconque des revendications précédentes, lorsqu'elles dépendent au moins de la revendication 2, **caractérisé en ce que** le deuxième écart ($\Delta_i$) est égal à une mesure d'indice de similarité structurelle (SSIM) calculé entre la au moins une quatrième image ($x_i$) bidimensionnelle de consigne de la au moins une tranche déterminée ($T_i$) de la matière céramique photopolymérisable dans le au moins un plan déterminé ($H_i$) et la sixième image (PR$_i$'), qui a été obtenue à une sortie (222) du troisième réseau (3) de neurones à partir du au moins un vecteur aléatoire ($V_i$).

11. Procédé suivant l'une quelconque des revendications précédentes, lorsqu'elles dépendent au moins de la revendication 2, **caractérisé en ce que** le deuxième écart ($\Delta_i$) est égal à un indice de Sørensen-Dice calculé entre la au moins une quatrième image ($x_i$) bidimensionnelle de consigne de la au moins une tranche déterminée ($T_i$) de la matière céramique photopolymérisable dans le au moins un plan déterminé ($H_i$) et la sixième image (PR$_i$'), qui a été obtenue à une sortie (222) du troisième réseau (3) de neurones à partir du au moins un vecteur aléatoire ($V_i$).

12. Procédé suivant l'une quelconque des revendications précédentes, lorsqu'elles dépendent au moins de la revendication 2, **caractérisé en ce que** le deuxième écart ($\Delta_i$) est égal à un indice de Jaccard calculé entre la au moins une quatrième image ($x_i$) bidimensionnelle de consigne de la au moins une tranche déterminée ($T_i$) de la matière céramique photopolymérisable dans le au moins un plan déterminé ($H_i$) et la sixième image (PR$_i$'), qui a été obtenue à une sortie (222) du troisième réseau (3) de neurones à partir du au moins un vecteur aléatoire ($V_i$).

13. Procédé suivant l'une quelconque des revendications précédentes, **caractérisé en ce que** l'entraînement (E4) du deuxième réseau (2) de neurones est effectué pour qu'à partir des N premières images (XA$_i$) bidimensionnelles de consigne des N tranches ($T_i$) de photopolymérisation le deuxième réseau (2) de neurones calcule N septièmes images (PR$_i$"), qui sont présentes sur une sortie (222) du deuxième réseau (2) de neurones et qui minimisent un troisième écart (E") calculé entre les N septièmes images (PR$_i$") et les N troisièmes images (PR$_i$).

14. Procédé suivant la revendication 13, **caractérisé en ce que** le troisième écart (E") est une troisième entropie croisée binaire (H(PR$_i$", PR$_i$)) calculée entre les N septièmes images (PR$_i$") et les N troisièmes images (PR$_i$).

15. Machine de fabrication additive (200) d'une pièce (P) à matière céramique photopolymérisée, comportant au moins un calculateur (100) configuré pour la mise en œuvre du procédé de fabrication suivant l'une quelconque des revendications précédentes.

FIG. 1

## FIG. 2

E1 — $\boxed{XA_i, XA_{i+1}, H_i, T_i, T}$

E2 — $\boxed{XA_i, x'_i, E}$

E3 {

E31 — $\boxed{P'}$

E32 — $\boxed{X_{TOM}}$

E33 — $\boxed{V_{3D}}$

E34 — $\boxed{PR_i}$

}

E4 — $\boxed{XA_i, PR''_i, PR_i, E''}$

E5 — $\boxed{3, 12, 13, 2}$

E6 — $\boxed{x_i, V_i, \Delta_i, H_i, PR'_i, V_{opt(i)}}$

E7 — $\boxed{4, 12, 13}$

E8 — $\boxed{V_{opt(i)}, X_{opt(i)}}$

E9 — $\boxed{XA_i, X_{opt(i)}}$

E10 — $\boxed{X_{opt(i)}, P}$

FIG. 3

# FIG. 4

EP 4 657 322 A1

**FIG. 5**

## FIG. 6

FIG. 7

EP 4 657 322 A1

## FIG. 8

## FIG. 9

## FIG. 10

## FIG. 11

## FIG. 12

Europäisches
Patentamt

European
Patent Office

Office européen
des brevets

**RAPPORT DE RECHERCHE EUROPEENNE**

Numéro de la demande

EP 25 30 5739

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/247737 A1 (SHEN ZHEN [CN] ET AL) 12 août 2021 (2021-08-12) * abrégé * * figure 1 * * alinéas [0002] - [0007], [0036], [0047] - [0049], [0057] - [0063], [0072] - [0078], [0095], [0099], [0100] * * le document en entier * ----- | 1-15 | INV. G06N3/0464 G06N3/048 G06N3/08 B33Y50/02 G06N3/02 B29C64/393 B33Y10/00 G06F30/27 G06N3/0455 ADD. G06F113/10 |
| A | Chowdhury Sushmit: "Artificial Neural Network Based Geometric Compensation for Thermal Deformation in Additive Manufacturing Processes", , 11 février 2016 (2016-02-11), pages 1-52, XP055929764, Extrait de l'Internet: URL:https://www.researchgate.net/publicati on/325615501_Artificial_Neural_Network_Bas ed_Geometric_Compensation_for_Thermal_Defo rmation_in_Additive_Manufacturing_Processe s [extrait le 2022-06-10] * abrégé * * figure 6 * * sections 3-3.4 * * le document en entier * ----- | 1-15 | |
| A | US 2023/038935 A1 (KOTHARI SUNIL [US] ET AL) 9 février 2023 (2023-02-09) * abrégé * * figures 1, 2, 6 * * paragraphes 28-32, 34, 38, 39, 54 * * revendication 10 * * le document en entier * ----- -/-- | 1-15 | **DOMAINES TECHNIQUES RECHERCHES (IPC)** G06F G06N B33Y B29C |

Le présent rapport a été établi pour toutes les revendications

| Lieu de la recherche | Date d'achèvement de la recherche | Examinateur |
|---|---|---|
| Munich | 19 septembre 2025 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**page 1 de 2**

Europäisches
Patentamt

European
Patent Office

Office européen
des brevets

## RAPPORT DE RECHERCHE EUROPEENNE

Numéro de la demande

EP 25 30 5739

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Anonymous: "3D printing processes - Wikipedia", , 22 mars 2024 (2024-03-22), XP093242008, Extrait de l'Internet: URL:https://en.wikipedia.org/w/index.php?title=3D_printing_processes&oldid=1214948384 [extrait le 2025-01-22] * pages 1, 2 * ----- | 1-15 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 19 septembre 2025 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 25 30 5739

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2025

| Document brevet cité au rapport de recherche | Date de publication | Membre(s) de la famille de brevet(s) | | Date de publication |
|---|---|---|---|---|
| US 2021247737 A1 | 12-08-2021 | CN | 109808183 A | 28-05-2019 |
| | | EP | 3907057 A1 | 10-11-2021 |
| | | US | 2021247737 A1 | 12-08-2021 |
| | | WO | 2020140477 A1 | 09-07-2020 |
| US 2023038935 A1 | 09-02-2023 | AUCUN | | |

Pour tout renseignement concernant cette annexe : voir Journal Officiel de l'Office européen des brevets, No.12/82

EPO FORM P0460